# EUROPEAN PATENT SPECIFICATION

(11) **EP 3 953 775 B1**
(45) Date of publication and mention of the grant of the patent: **18.11.2026**
(21) Application number: 20736445.6
(22) Date of filing: 29.06.2020
(51) Int. Cl.: G05B 19/042

(54) **METHOD AND APPARATUS FOR OPERATING AN AUTOMATED SYSTEM, AUTOMATED SYSTEM, AND COMPUTER-PROGRAM PRODUCT**
VERFAHREN UND VORRICHTUNG ZUM BETREIBEN EINER AUTOMATISIERTEN MASCHINE, AUTOMATISIERTE MASCHINE UND COMPUTERPROGRAMMPRODUKT
PROCÉDÉ ET APPAREIL PERMETTANT DE FAIRE FONCTIONNER UNE MACHINE AUTOMATIQUE, MACHINE AUTOMATIQUE ET PRODUIT-PROGRAMME D'ORDINATEUR

(30) Priority: 28.06.2019 EP 19183397
(43) Date of publication of application: 16.02.2022
(73) Proprietor: OMRON Corporation, Shiokoji-dori, Shimogyo-Ku Kyoto-shi Kyoto 600-8530 (JP)
(72) Inventor: NASER, Mohammad, 5234 GM 's-Hertogenbosch (NL); ELIAS, Martijn, 5234 GM 's-Hertogenbosch (NL)
(74) Representative: HKW Intellectual Property PartG mbB
(86) International application number: PCT/IB2020/056117
(87) International publication number: WO 2020/261236

(56) References cited:
- WO-A1-2018/206406
- US-A- 6 145 115
- US-A1- 2008 091 394
- US-A1- 2012 101 613

## Description

The present disclosure relates to methods, apparatuses and computer-program products for operating automated systems, such as for operating factory automation systems, industrial networks, interacting field devices and the like. Further, automated systems and networks of interacting devices are disclosed. In particular, aspects of updating or replacing control devices in automation systems are considered.

Automation systems can comprise a controlled device for performing a task as a function of control data received from a control device of the automation system. It can be desirable to replace and/or update the control device. However, replacing and/or updating the control device can be difficult if the exact functionality of the control device is not known. It is thus desirable to facilitate the replacement and/or update of the control device.

US 5,530,867 discloses a software for self-programming. The self-programming is based on parameters including input data, control data and the like. Further, US 2012/0023054 A1 discloses a method and device for creating a process model which is processable by a machine.

US 6 145 115 A discloses a duplication of functions of a first device into a second device so as to have the same functions as the first device. A CPU supplies a predetermined input data to both the second device and the first device. A plurality of logic candidates for generating output data correspond to specific input data are stored in the hard disk as candidates. The CPU selects a candidate which makes both the output data generated by the second device and the first device identical with each other for all the supplied input data within the candidates.

WO 2018/206406 relates to a computer implemented method of executing a software module comprising a machine learning algorithm as an executable software component configurable to approximate a function relating a domain data set to a range data set, a data store, and a message handler as an executable software component arranged to receive input data and communicate output data for the module, wherein the message handler is adapted to determine domain parameters for the algorithm based on the input data and to generate the output data based on a result generated by the algorithm. The method comprises generating a message as input data for the module, the message comprising instructions for execution by the module to effect a modification of the machine learning algorithm of the module.

It is one object of the present invention to provide an improved method for operating an automated system. It is another object to provide an improved system for operating an automated system. A further object is to provide an improved machine controller device.

The invention is defined by the appended set of claims. Exemplary embodiments are described in the following to illustrate the invention.

The computer-implemented mapping algorithm of the second control device can be adapted such that the output data generated by the second control device is similar to the control data generated by the first control device. In other words, the computer-implemented mapping algorithm of the second control device may be autonomously adapted such that the functionality of the second control device is similar to the functionality of the first control device. That way, the first control device may be replaced by the second control device despite not knowing the exact functionality of the first control device without programming hassle. Replacing the first control device by the second control device can also be advantageous for future improvement of the original first control device and/or in cases where the programming language of the first control device is not compatible with newer versions.

The automated system may be an automation system, in particular a factory automation system. It can comprise a plurality of devices such as field devices. One of the devices of the automated system is the controlled device, for example a field device or a robot. The controlled device can perform an action or a task based on control data received from the first control device. For example, the controlled device can mix chemicals in accordance with a recipe received as control data.

The first control device may be a central processing unit (CPU), a programmable logic controller (PLC) or the like. It may be a central control device of the automated system and/or a control device associated with the controlled device. The first control device can receive system data. The system data includes any type of data relating to the automated system. In particular, it includes data from an actuator and/or sensor of the automated system, configuration data, past data and/or present data. The system data is for example received from a cloud, a database, a server, a user or the like. The system data can be considered as a recipe for the first control device.

In particular, the first control device generates the control data as a function of the received system data thereby mapping the system data to control data according to an unknown control algorithm. In other words, the exact functionality of the first control device can be at least partly unknown to an operator of the automated system as the operator may not know the control algorithm based on which the first control device generates the control data from the received system data. The control algorithm may be at least partly unknown when the first control device was produced and/or programmed by an external manufacturer and/or when the first control device is old. In some embodiments, it might even be unknown which system data is used by the first control device to generate the control data. In other words, the nature and/or contents of the system data and/or the extent to which the system data is used by the first control device might be unknown.

Due to the at least partly unknown control algorithm of the first control device, replacing and/or updating the first control device can be difficult. In particular, replacing and/or updating the first control device can involve time-consuming manual reprogramming of the first control device.

In order to overcome these difficulties, a second control device can be used. The second control device may be an industrial PC device. The second control device can be used to perform the method step of adapting described above. In detail, the second control device can generate output data from input data using a computer-implemented mapping algorithm. The second control device can be considered as a replacement control device.

In particular, the computer-implemented mapping algorithm is modified in order to provide a similar functionality as the (unknown) control algorithm from the first control device. Namely, the computer-implemented mapping algorithm is adapted such that is generates output data that is similar to the control data generated by the first control device when it receives the input data. In other words, the first control device and the second control device can generate similar outputs when receiving similar inputs.

For complex control algorithms and large amounts of system data and control data, a neural network algorithm and/or a machine learning algorithm is preferred. In that case, the neural network algorithm and/or the machine learning algorithm can be used to determine the mapping algorithm. The input data and/or the output data of the second control device can be used as the training data. An example for a machine learning algorithm includes a reinforcement learning algorithm. The algorithm may be improved continuously upon reception of additional data relating to the automated system by the second control device. Alternatively or additionally, the mapping algorithm may include a table mapping a specific input value to a corresponding output value (mapping table) or a decision tree.

The term "adapting" here refers to the modification of the contents of the mapping algorithm. In particular, the algorithm itself (or a program defining the algorithm) is modified and/or developed in the adapting step. The adapting step in particular does not refer to a selection amongst different possible predefined algorithms.

Adapting can be the construction of a control strategy according to a relationship between the input data and the output data. The adapting can include the identification of the nature of the input data and/or its classification. For example, it can be distinguished between recipe data which determines the product made by the process of the automated system, control data which controls the machine making the product, feedback data which includes information provided from the machine to the control system and/or information signals which are used to analyze the process. The second control device for example stores the data from the different categories separately and analyzes them independently from one another to correspondingly adapt the mapping algorithm. Further, the second control device may identify relationships between the different data types and adapt the mapping algorithm accordingly.

In order to adapt the mapping algorithm, the second control device may include an agent which, based on the input data, performs an action to be tested. The action can be selected from a finite number of available actions, for example. The second control device monitors the result of the action performed on the input data by the agent and determines whether this result matches the operation of the first control device, in particular the control data, or at least goes into the same direction. These steps can be repeated to obtain a chain of actions, which can then be implemented in the mapping algorithm. If one result does not have the desired behavior, the second control device can go back to the last result with the expected behavior, for example.

In particular, the second control device monitors whether a change in the input and/or output data occurs and accordingly adapts the mapping algorithm. The second control device may further test the developed and/or adapted mapping algorithm, in particular to verify whether the constructed mapping algorithm is consistent with the operation of the first control device.

The input data received by the second control device may correspond to and/or include the system data provided to the first control device. For example, if the control device consistently receives five parameters as system data and sends seven parameters as control data, then the second control may monitor the repetition of this incident. At a high enough predetermined confidence level, i.e. when the incident has been repeated often enough, the second control device concludes that when five parameters are received, the output must be seven parameters, and adapt the mapping algorithm accordingly.

The input data does not have to be identical with the system data received by the first control device. Rather, the input data for the second control device may for example include all kinds of (present and past) data relating to the automated system, for example including data from sensors and/or actuators of the automated system and potentially data from the first control device.

The input data, the system data, the control data and/or the output data can include any type of data, in particular analog or digital inputs/outputs, database transaction, motor control data and the like.

The mapping algorithm can be adapted without knowledge of the system data and/or of the output data of the first control device to map the functionality of the first control device in an optimal manner. This is in particular advantageous, when little to no information is available on the system data and/or the output data of the first control device, for example, when the first control device is not working anymore. The second control device can be adapted to map the first control device even if the first control device is no longer working.

The mapping of the computer-implemented mapping algorithm to the control algorithm may be performed autonomously, for example using the second control device. That way, the second control device does not need to be programmed manually. The programming is thereby facilitated and becomes less time consuming. Further, a more reliable mapping can be achieved.

In particular, the word "similar" here means that the compared entities are similar with a predetermined similarity degree. The similarity degree can be seen as a measure for how similar the compared entities are, namely the extent to which the compared entities are identical or different. The predetermined similarity degree can for example indicate that the output data and the control data are similar if the difference between the values is always less than 5% of the control data. Alternatively, the output data and the control data may be considered as being similar if they are identical more than 95% of the time.

Once the desired similarity between output data and control data is obtained, the second control device may reliably replace the first control device. Facultatively, the second control device may then further be updated as compared to the first control device.

The second control device may be able to self-test the adapted mapping algorithm. In this regard, the second control device may perform a similarity check including verifying whether output data from the second control device matches the control data. If there is a mismatch, the second control device may gather more information (for example by receiving more input data) and modify the mapping algorithm based on the additional information and/or store the mismatch information for further monitoring. If the mismatch only occurs once, it can be marked as an error. If it occurs multiple times, the mapping algorithm can be modified.

The second control device can be used to perform the monitoring step. In particular, the method comprises a monitoring step in which the system data and the corresponding control data are observed and/or collected, in particular received, by the second control device. The monitoring can also include receiving metadata on the system data and/or the control data. The computer-implemented mapping algorithm can be autonomously adapted or updated based on the collected system data and control data.

According to a further embodiment, the steps of monitoring and/or of adapting are repeatedly executed using a plurality of combinations of system data and generated control data.

In particular, the steps of monitoring and adapting are repeated until the desired similarity between output data and control data is obtained. The repeated execution of the steps of monitoring and adapting can be seen as a learning process in which the computer-implemented mapping algorithm is optimized in order to best map the control algorithm of the first control device.

In particular, the steps of monitoring and adapting are performed using real system data and control data which are also used to operate the automated system. The computer-implemented mapping algorithm can be adapted dynamically, while the automated system is operating (operational phase). This is advantageous because the computer-implemented mapping algorithm can be developed without stopping the automated system and without interfering with the operation of the automated system. In detail, the automated system does not need to be interrupted when the first control device gets replaced.

According to a further embodiment, the step of adapting includes comparing the control data generated by the first control device and the output data generated by the second control device as a function of the same received system data for determining the similarity degree.

In particular, the similarity degree is determined by comparing the control data and the output data respectively determined by the first and second control devices based on the same system data. This comparison may be performed by the second control data itself or by an external comparison device of the automated system.

According to a further embodiment, the method further comprises: if the similarity degree is larger than a predetermined upper threshold, replacing the first control device by the second control device, an optionally deactivating the first control device.

In particular, the desired similarity between output data and control data is obtained when the similarity degree is larger than a predetermined upper threshold. For example, the predetermined upper threshold can be a 99% similarity between control data and output data.

According to a further embodiment, the method may further comprise: if the similarity degree is smaller than a predetermined lower threshold, initiating the obtention of additional input data and/or storing the determined similarity degree in a database.

In particular, when the determined similarity is lower than the predetermined lower threshold (for example, lower than 80%), the second control device may determine that the mapping algorithm does not map the first control device well enough. In this case, it might request and/or initiate the obtention of additional input data, for example in order to modify the mapping algorithm based on the additional input data. Further, the second control device may store the determined similarity degree in a database for further reference. In some embodiments, if a given mismatch occurs only once, it can be marked as an error. If it occurs multiple times, the mapping algorithm can be modified.

The predetermined upper threshold and the predetermined lower threshold can be equal to each other. Further, in some embodiments, the similarity degree may distinguish only between the case where the output data matches the control data (100% similarity) and the case where the output data does not match the control data (0% similarity).

According to a further embodiment, determining the similarity degree includes statistically evaluating a coincidence of control data generated by the first control device and output data generated by the second control device if the same system data is received/input.

In particular, the results of the comparison between control data and output data are extrapolated in order to determine the similarity degree.

According to a further embodiment, the method further comprises: replacing the first control device by the second control device, if the control data generated by the first control device and the output data generated by the second control device match for a predetermined number of, in particular consecutive, control cycles of the automated system.

According to a further embodiment, the controlled device comprises a field device, a production unit and/or a robot.

According to a further embodiment, the system data are sensor data acquired by sensor devices in the automated system.

The sensor devices can sense parameters such as temperature, pressure, velocity or the like and generate system data accordingly. The sensor devices can be located next to the controlled device in order to sense parameters of the controlled device. In this case, the first control device provides control data based on sensor data of the controlled device.

According to a further embodiment,
the automated system further comprises a database device for providing configuration data for the first control device; and
the first control device is further implemented to receive configuration data and to generate the control data as a function of the received system data and the configuration data;
adapting the second control device includes inputting the system data and the configuration data as input data to the second control device.

The first control device may generate the control data based on both the system data and the configuration data. Accordingly, the computer-implemented mapping algorithm is adapted based on the system data and the configuration data (together forming the input data) and on the control data generated by the first control device.

According to a further embodiment, the system data, the configuration data and/or the control data are each represented by a plurality of analog and/or digital signals.

An automated system with a machine controller device is provided.

The machine controller device may correspond to the previously described second control device. In particular, the machine controller device is configured to be used as the second control device in the method described herein.

The features described with reference to the second control device equally apply to the machine controller device.

Further, an operating system for operating an automated system is disclosed. The automated system comprises:
a controlled device implemented to perform an action as a function of received control data; and
a first control device implemented to receive system data and to generate control data for controlling the controlled device as a function of the received system data.

The automated system further comprises the machine device, wherein the computer-implemented mapping algorithm includes a neural network algorithm and/or a machine learning algorithm.

In particular, the automated system further comprises:
a second control device implemented to receive input data and to generate output data as a function of the input data according to a computer-implemented mapping algorithm;
a monitoring device for monitoring the system data received by the first control device and the corresponding control data generated by the first control device; and
an adaptation device for adapting the computer-implemented mapping algorithm such that the second control device, upon receiving the system data as input data generates output data that is similar to the control data generated by the first control device with a predetermined similarity degree.

The monitoring device and/or the adaptation device can be part of the second control device. The automated system may be configured to implement the method described herein.

The embodiments and features described with reference to the method equally apply to the disclosed automated system.

A computer program product is provided. The computer program product includes computer-readable instructions causing a computing system including one or more processing devices, in response to executing the machine-readable instructions, to execute the method described herein, in particular to perform the above-described methods and functions for operating an automated system.

In embodiments, computer-program product comprises a program code for executing the above-described methods and functions by a computerized control device when run on at least one control computer. A computer program product, such as a computer program means, may be embodied as a memory card, USB stick, CD-ROM, DVD or as a file which may be downloaded from a server in a network. For example, such a file may be provided by transferring the file comprising the computer program product from a wireless communication network. Further possible implementations or alternative solutions of the invention also encompass combinations - that are not explicitly mentioned herein - of features described above or below with regard to the embodiments. The person skilled in the art may also combine individual features disclosed in connection with the various embodiments of the invention.

Further embodiments, features and advantages of the present invention will become apparent from the subsequent description and dependent claims, taken in conjunction with the accompanying drawings, in which:
- Fig. 1: shows an embodiment of an automated system;
- Fig. 2: shows a method for operating an automated system according to a first embodiment;
- Fig. 3: shows a method for operating an automated system according to a second embodiment; and
- Fig. 4: shows an automated system with a replaced control device.

In the Figures, like reference numerals designate like or functionally equivalent elements, unless otherwise indicated.

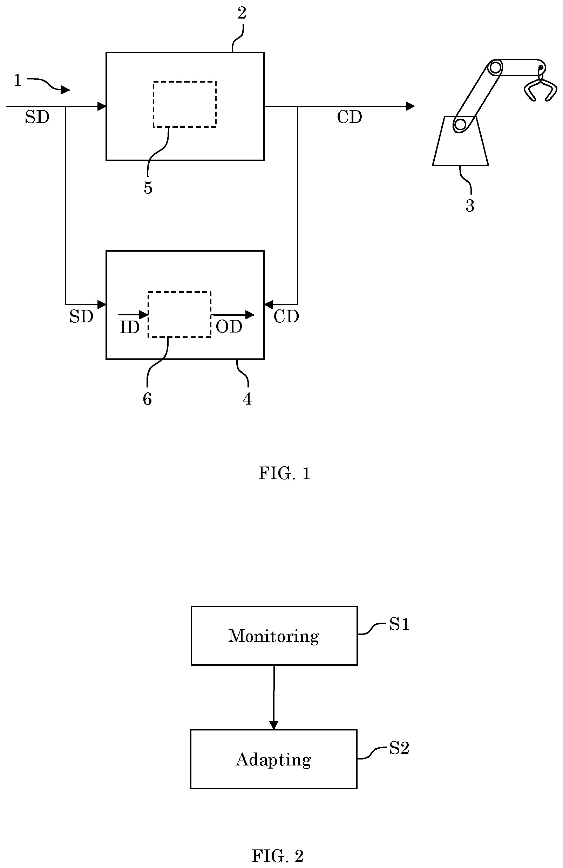

Fig. 1 shows an embodiment of an automated system 1. The automated system 1 is a factory automation system. It comprises a first control device 2, a controlled device 3 and a second control device 4. The automated system 1 further comprises a plurality of field devices which are not shown in Fig. 1.

The controlled device 3 is a robot arm. It is controlled by the first control device 2. In detail, the first control device 2 receives system data SD from a server (not shown). The system data SD are here instructions about how to screw a cap onto a bottle.

The first control device 2 is a PLC which generates control data CD based on the system data SD, for example using a control algorithm 5. The control data CD are an adaptation of the system data SD to the controlled device 3. In other words, the control data CD comprise instructions for the controlled device 3 about the actions to perform in order to actually screw the cap ono the bottle. The controlled device 3 performs the actions as a function of the control data CD received from the first control device 2.

In the example of Fig. 1, the first control device 2 is rather old and need to be updated. However, it was originally programmed by an external manufacturer and the user of the automated system 1 does not know the details about how the first control device 2, in particular the control algorithm 5 works.

In order to update the old first control device 2, the first control device 2 can be replaced by the second control device 4, which can then be updated at wish. In order to replace the first control device 2 by the second control device 4, the second control device 4 has to be able to reliably perform the functions of the first control device 2 in a similar manner.

The second control device 4 is removeable connected to the input and output of the first control device 2 and is thereby capable of monitoring the system data SD and the corresponding control data CD generated by the first control device 2.

The second control device 4 is here an industrial PC (IPC). The second control device 4 comprises a computer-implemented mapping algorithm 6 which generates output data OD from input data ID. As an example, the input data ID here includes the system data SD and further includes additional data on the automated system 1, for example data received from sensors and/or actuators of the automated system 1. The computer-implemented mapping algorithm 6 will be further described below.

The automated system 1 of Fig. 1 can be operated according to a method for operating an automated system. An example of such a method is shown in Fig. 2. In detail, Fig. 2 shows a method for operating an automated system 1.

In step S1, the system data SD received by the first control device 2 and the corresponding control data CD generated by the first control device 2 are monitored. This monitoring is here performed by the IPC 4. The monitoring consists in collecting large amounts of system data SD and of corresponding control data CD. The monitoring occurs while the automated system 1, and in particular the first control device 2 and controlled device 3 are in operation. The monitored data SD, CD is thus "real" operation data.

In step S1, the IPC 2 stores data tables comprising the monitored system data SD and the corresponding control data CD. An example of such a monitoring table is shown in Table 1. In Table 1, the system data SD comprises three input parameters IN1, IN2 and IN3 and the control data CD comprises three output parameters OUT1, OUT2 and OUT3 generated by the first control device 2 as control data CD for the inputs (system data SD) IN1, IN2 and IN3.

**Table 1:**

| IN1 | IN2 | IN3 | OUT1 | OUT2 | OUT3 |
|---|---|---|---|---|---|
| 1 | 3 | 2 | 5 | 1 | 2 |

In a step S2, the computer-implemented mapping algorithm 6 of the IPC 4 is adapted such that upon receiving the system data SD as input data ID, the IPC 4 generates output data OD that is similar to the control data CD generated by the first control device 2 with a predetermined similarity degree. In the example of Fig. 1 and 2, step S2 is performed by the IPC 4.

Step S2 corresponds to a learning step in which the computer-implemented mapping algorithm 6 gets mapped to the control algorithm 5. In detail, the final contents of the two algorithms 5, 6 and the used programming languages are not necessarily the same. However, based on a same input (system data SD as input data ID), they should generate a similar output (control data CD, output data OD).

The computer-implemented mapping algorithm 6 is here a machine-learning algorithm. The computer-implemented mapping algorithm 6 learns from the stored monitoring tables and autonomously adapts or updates itself accordingly. The computer-implemented mapping algorithm 6 is adapted according to the relationship between system data SD and the control data CD.

For example, the adaptation of the computer-implemented mapping algorithm 6 bases itself on the detection of which input value IN1 - IN3 correlates with which output value OUT1 - OUT3 and vice versa.

For example, the value IN2 correlates with OUT2 and OUT3 because a modification of IN2 modifies OUT2 and OUT3, as shown in the below monitoring table (Table 2).

**Table 2:**

| IN1 | IN2 | IN3 | OUT1 | OUT2 | OUT3 |
|---|---|---|---|---|---|
| 1 | 7 | 2 | 5 | 0 | 5 |

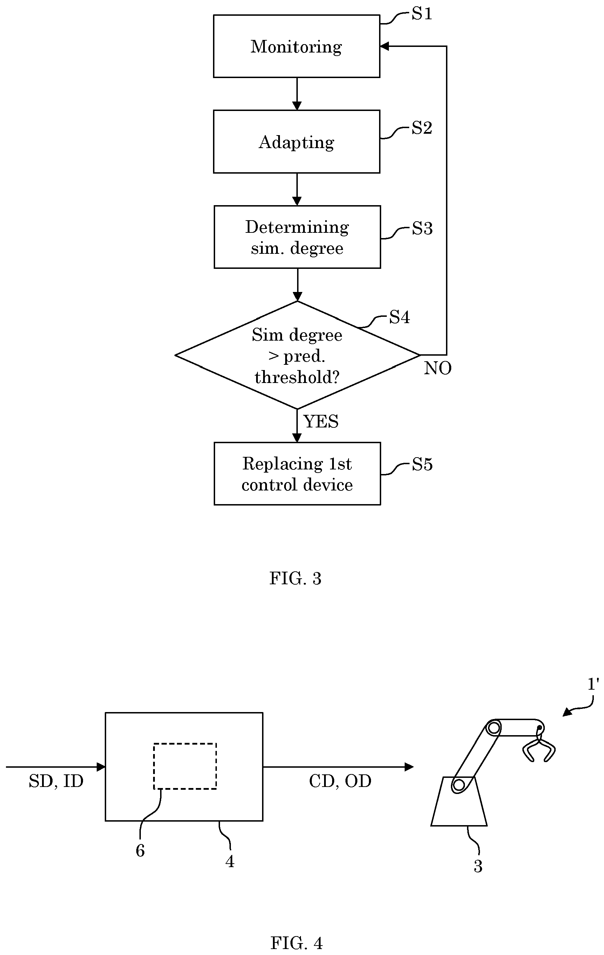

The predetermined similarity degree is here achieved when the output data OD and the control data CD are equal 95% of the time. When the desired similarity degree is achieved, the IPC 4 can replace the first control device 2 and take over its functionalities, as shown in Fig. 4. In detail, the IPC 4 then receives the system data SD as input data ID and generates the control data CD as the output data OD using the trained computer-implemented mapping algorithm 6. The control data CD generated by the IPC 4 is then sent to the robot 3.

The old first control device 2 can thus be replaced by a newer and understandable control device 4 which can be more easily updated as it can be understood.

Fig. 3 shows a further method for operating the automated system 1 of Fig. 1. Beyond the already described steps S1 and S2, the method shown in Fig. 3 further comprises the steps S3 - S5. The steps S3 - S5 allow a testing of the computer-implemented mapping algorithm 6. This testing might be performed by the second control device 4.

In a step S3, the similarity degree between the output data OD and the control data CD respectively generated by the IPC 4 and the first control device 2 for the same system data SD as an input is determined. The determination of the similarity degree involves comparing the control data CD generated by the first control device 2 and the output data OD generated by the IPC 4 as a function of the same system data SD. The comparison in step S3 is here performed by the IPC 4 itself.

In a step S4, the similarity degree determined in step S3 is compared to a predetermined threshold, which is prestored by the IPC 4 or provided by a user. As an example, the predetermined threshold here requires a similarity of 99%.

If the similarity degree is greater than the predetermined threshold ("YES" in step S4), the computer-implemented mapping algorithm 6 of the IPC 4 is validated and the first control device 2 is replaced by the IPC 4. The first control device 2 is removed without stopping the operation of the automated system 1 because the already connected IPC 4 allows for a smooth transition of the control functionalities. As a result of step S5, the automation system 1' of Fig. 4 with a replaced control device 2 is obtained.

If the similarity degree is not greater than the predetermined threshold ("NO" in step S4), the previously described steps S2 - S4 are repeated until the similarity degree becomes greater than the predetermined threshold ("YES" in step S4) or until an error is noticed.

Although the present invention has been described in accordance with preferred embodiments, it is obvious for the person skilled in the art that modifications are possible in all embodiments. For example, the first control device 2 may also receive configuration data based on which it determines the control data CD. In this case, the system data SD and the configuration data are used as the input data in the adapting step S2.

Further, the controlled device 3 can also be a field device or the like. The computer-implemented mapping algorithm 6 can also comprise a mapping table or a decision tree instead of a machine-learning algorithm. Other testing methods than that described in view of Fig. 3 are also possible, for example observing whether the control data CD and the output data OD match for a predetermined number of consecutive cycles of the automated system 1. It is also possible to vary the number of inputs IN1 - IN3 and of outputs OUT1 - OUT3.

Although in the described example, the system data SD is known to the second control device 4, it is also possible to adapt the mapping algorithm 6 without any knowledge of the system data SD input into the first control device 2. For example, the input data ID of the second control device 4 can include any past/present data relating to the automated system 1.

### REFERENCE NUMERALS

- 1: automated system
- 1': automated system
- 2: first control device
- 3: controlled device
- 4: second control device
- 5: control algorithm
- 6: computer-implemented mapping algorithm
- CD: control data
- ID: input data
- OD: output data
- SD: system data
- S1 - S5: method steps

## Claims

1. A method for operating an automated system (1), the system (1) comprising a first control device (2), a controlled device (3) and a second control device (4), wherein:
the controlled device (3) is implemented to perform an action as a function of received control data (CD);
the first control device (2) is implemented to receive system data (SD) and to generate control data (CD) for controlling the controlled device (3) as a function of the received system data (SD); and
the second control device (4) is implemented to receive input data (ID) and to generate output data (OD) as a function of the input data (ID) according to a computer-implemented mapping algorithm (6);
wherein the method comprises:
adapting (S2) the computer-implemented mapping algorithm (6) such that the second control device (4), upon receiving the system data (SD) as input data (ID) generates output data (OD) that is similar to the control data (CD) generated by the first control device (2) with a predetermined similarity degree, wherein the computer-implemented mapping algorithm (6) includes a neural network algorithm and/or a machine learning algorithm;
monitoring (S1) the system data (SD) received by the first control device (2) and the corresponding control data (CD) generated by the first control device (2), wherein the steps of monitoring and adapting are executed during an operational phase of the automated system (1).

2. The method according to claim 1, wherein the steps of monitoring and/or of adapting are repeatedly executed using a plurality of combinations of system data (SD) and generated control data (CD).

3. The method according to any one of claims 1 or 2, wherein the step of adapting includes comparing the control data (CD) generated by the first control device (2) and the output data (OD) generated by the second control device (4) as a function of the same received system data (SD) for determining (S3) the similarity degree.

4. The method according to any one of claims 1 to 3, further comprising:
if the similarity degree is larger than a predetermined upper threshold, replacing (S5) the first control device (2) by the second control device (4), and optionally deactivating the first control device (2); and/or
if the similarity degree is smaller than a predetermined lower threshold, initiating the obtention of additional input data (ID) and/or storing the determined similarity degree in a database.

5. The method according to any one of claims 1 to 4, wherein determining the similarity degree includes statistically evaluating a coincidence of control data (CD) generated by the first control device (2) and output data (OD) generated by the second control device (4) if the same system data (SD) is received/input.

6. The method according to any one of claims 1 to 5 further comprising: replacing the first control device (2) by the second control device (4), if the control data (CD) generated by the first control device (2) and the output data (OD) generated by the second control device (4) match for a predetermined number of, in particular consecutive, control cycles of the automated system (1).

7. The method according to any one of claims 1 to 6, wherein the controlled device (3) comprises a field device, a production unit and/or a robot.

8. The method according to any one of claims 1 to 7, wherein the system data (SD) are sensor data acquired by sensor devices in the automated system (1).

9. The method according to any one of claims 1 to 8, wherein:
the automated system (1) further comprises a database device for providing configuration data for the first control device (2); and
the first control device (2) is further implemented to receive configuration data and to generate the control data (CD) as a function of the received system data (SD) and the configuration data;
adapting the second control device (4) includes inputting the system data (SD) and the configuration data as input data (ID) to the second control device (4).

10. The method according to any one of claims 1 to 9, wherein the system data (SD), the configuration data and/or the control data (CD) are each represented by a plurality of analog and/or digital signals.

11. An automated system comprising:
a controlled device (3) implemented to perform an action as a function of received control data (CD); and
a first control device (2) implemented to receive system data (SD) and to generate control data (CD) for controlling the controlled device (3) as a function of the received system data (SD); and
a machine controller device (4) implemented to:
receive input data (ID) and generate output data (OD) as a function of the input data (ID) according to a computer-implemented mapping algorithm (6); and
adapt the computer-implemented mapping algorithm (6) such that the machine controller device (4), upon receiving the system data (SD) as input data (ID) generates output data (OD) that is similar to the control data (CD) generated by the first control device (2) with a predetermined similarity degree, wherein the computer-implemented mapping algorithm (6) includes a neural network algorithm and/or a machine learning algorithm;
monitor (S1) the system data (SD) received by the first control device (2) and the corresponding control data (CD) generated by the first control device (2), wherein the steps of monitoring and adapting are executed during an operational phase of an automated system (1).

12. A computer program product including computer-readable instructions causing a computing system including one or more processing devices, in response to executing the machine-readable instructions, to execute the method according to one of claims 1 to 10.

## Patentansprüche

1. Verfahren zum Betreiben eines automatisierten Systems (1), wobei das System (1) eine erste Steuereinrichtung (2), eine gesteuerte Einrichtung (3) und eine zweite Steuereinrichtung (4) aufweist, wobei:
die gesteuerte Einrichtung (3) dazu eingerichtet ist, eine Aktion in Abhängigkeit von empfangenen Steuerdaten (CD) durchzuführen;
die erste Steuereinrichtung (2) dazu eingerichtet ist, Systemdaten (SD) zu empfangen und Steuerdaten (CD) zum Steuern der gesteuerten Einrichtung (3) in Abhängigkeit von den empfangenen Systemdaten (SD) zu erzeugen; und
die zweite Steuereinrichtung (4) dazu eingerichtet ist, Eingangsdaten (ID) zu empfangen und Ausgangsdaten (OD) in Abhängigkeit von den Eingangsdaten (ID) gemäß einem computerimplementierten Abbildungsalgorithmus (6) zu erzeugen;
wobei das Verfahren Folgendes aufweist:
Anpassen (S2) des computerimplementierten Abbildungsalgorithmus (6) derart, dass die zweite Steuereinrichtung (4) bei Empfang der Systemdaten (SD) als Eingangsdaten (ID) Ausgangsdaten (OD) erzeugt, die den von der ersten Steuereinrichtung (2) erzeugten Steuerdaten (CD) mit einem vorbestimmten Ähnlichkeitsgrad ähnlich sind, wobei der computerimplementierte Abbildungsalgorithmus (6) einen neuronalen Netzwerkalgorithmus und/oder einen maschinellen Lernalgorithmus umfasst;
Überwachen (S1) der von der ersten Steuereinrichtung (2) empfangenen Systemdaten (SD) und der entsprechenden von der ersten Steuereinrichtung (2) erzeugten Steuerdaten (CD), wobei die Schritte des Überwachens und Anpassens während einer Betriebsphase des automatisierten Systems (1) ausgeführt werden.

2. Verfahren nach Anspruch 1, wobei die Schritte des Überwachens und/oder des Anpassens unter Verwendung mehrerer Kombinationen von Systemdaten (SD) und erzeugten Steuerdaten (CD) wiederholt ausgeführt werden.

3. Verfahren nach einem der Ansprüche 1 oder 2, wobei der Schritt des Anpassens ein Vergleichen der von der ersten Steuereinrichtung (2) erzeugten Steuerdaten (CD) und der von der zweiten Steuereinrichtung (4) erzeugten Ausgangsdaten (OD) in Abhängigkeit von denselben empfangenen Systemdaten (SD) zum Bestimmen (S3) des Ähnlichkeitsgrads umfasst.

4. Verfahren nach einem der Ansprüche 1 bis 3, das ferner Folgendes aufweist:
falls der Ähnlichkeitsgrad größer als ein vorbestimmter oberer Schwellenwert ist, Ersetzen (S5) der ersten Steuereinrichtung (2) durch die zweite Steuereinrichtung (4) und optional Deaktivieren der ersten Steuereinrichtung (2); und/oder
falls der Ähnlichkeitsgrad kleiner als ein vorbestimmter unterer Schwellenwert ist, Initiieren des Erhaltens von zusätzlichen Eingangsdaten (ID) und/oder Speichern des bestimmten Ähnlichkeitsgrads in einer Datenbank.

5. Verfahren nach einem der Ansprüche 1 bis 4, wobei das Bestimmen des Ähnlichkeitsgrads ein statistisches Auswerten einer Koinzidenz von von der ersten Steuereinrichtung (2) erzeugten Steuerdaten (CD) und von von der zweiten Steuereinrichtung (4) erzeugten Ausgangsdaten (OD) umfasst, falls dieselben Systemdaten (SD) empfangen/eingegeben werden.

6. Verfahren nach einem der Ansprüche 1 bis 5, das ferner Folgendes aufweist: Ersetzen der ersten Steuereinrichtung (2) durch die zweite Steuereinrichtung (4), falls die von der ersten Steuereinrichtung (2) erzeugten Steuerdaten (CD) und die von der zweiten Steuereinrichtung (4) erzeugten Ausgangsdaten (OD) für eine vorbestimmte Anzahl von, insbesondere aufeinanderfolgenden, Steuerzyklen des automatisierten Systems (1) übereinstimmen.

7. Verfahren nach einem der Ansprüche 1 bis 6, wobei die gesteuerte Einrichtung (3) ein Feldgerät, eine Produktionseinheit und/oder einen Roboter aufweist.

8. Verfahren nach einem der Ansprüche 1 bis 7, wobei die Systemdaten (SD) Sensordaten sind, die von Sensoreinrichtungen in dem automatisierten System (1) erfasst werden.

9. Verfahren nach einem der Ansprüche 1 bis 8, wobei:
das automatisierte System (1) ferner eine Datenbankeinrichtung zum Bereitstellen von Konfigurationsdaten für die erste Steuereinrichtung (2) aufweist; und
die erste Steuereinrichtung (2) ferner dazu eingerichtet ist, Konfigurationsdaten zu empfangen und die Steuerdaten (CD) in Abhängigkeit von den empfangenen Systemdaten (SD) und den Konfigurationsdaten zu erzeugen;
das Anpassen der zweiten Steuereinrichtung (4) ein Eingeben der Systemdaten (SD) und der Konfigurationsdaten als Eingangsdaten (ID) in die zweite Steuereinrichtung (4) umfasst.

10. Verfahren nach einem der Ansprüche 1 bis 9, wobei die Systemdaten (SD), die Konfigurationsdaten und/oder die Steuerdaten (CD) jeweils durch mehrere analoge und/oder digitale Signale repräsentiert werden.

11. Automatisiertes System, aufweisend:
eine gesteuerte Einrichtung (3), die dazu eingerichtet ist, eine Aktion in Abhängigkeit von empfangenen Steuerdaten (CD) durchzuführen; und
eine erste Steuereinrichtung (2), die dazu eingerichtet ist, Systemdaten (SD) zu empfangen und Steuerdaten (CD) zum Steuern der gesteuerten Einrichtung (3) in Abhängigkeit von den empfangenen Systemdaten (SD) zu erzeugen; und
eine Maschinensteuerungseinrichtung (4), die dazu eingerichtet ist:
Eingangsdaten (ID) zu empfangen und Ausgangsdaten (OD) in Abhängigkeit von den Eingangsdaten (ID) gemäß einem computerimplementierten Abbildungsalgorithmus (6) zu erzeugen; und
den computerimplementierten Abbildungsalgorithmus (6) derart anzupassen, dass die Maschinensteuerungseinrichtung (4) bei Empfang der Systemdaten (SD) als Eingangsdaten (ID) Ausgangsdaten (OD) erzeugt, die den von der ersten Steuereinrichtung (2) erzeugten Steuerdaten (CD) mit einem vorbestimmten Ähnlichkeitsgrad ähnlich sind, wobei der computerimplementierte Abbildungsalgorithmus (6) einen neuronalen Netzwerkalgorithmus und/oder einen maschinellen Lernalgorithmus umfasst;
die von der ersten Steuereinrichtung (2) empfangenen Systemdaten (SD) und die entsprechenden von der ersten Steuereinrichtung (2) erzeugten Steuerdaten (CD) zu überwachen (S1), wobei die Schritte des Überwachens und Anpassens während einer Betriebsphase eines automatisierten Systems (1) ausgeführt werden.

12. Computerprogrammprodukt, das computerlesbare Anweisungen umfasst, die bewirken, dass ein Rechensystem, das eine oder mehrere Verarbeitungseinrichtungen umfasst, in Reaktion auf die Ausführung der maschinenlesbaren Anweisungen das Verfahren nach einem der Ansprüche 1 bis 10 ausführt.

## Revendications

1. Procédé pour faire fonctionner un système (1) automatisé, le système (1) comprenant un premier dispositif (2) de commande, un dispositif (3) commandé et un deuxième dispositif (4) de commande, dans lequel :
le dispositif (3) commandé est constitué pour effectuer une action en fonction de données (CD) de commande reçues ;
le premier dispositif (2) de commande est constitué pour recevoir des données (SD) de système et pour produire des données (CD) de commande pour commander le dispositif (3) commandé en fonction des données (SD) de système reçues ; et
le deuxième dispositif (4) de commande est constitué pour recevoir des données (ID) d'entrée et pour produire des données (OD) de sortie en fonction des données (ID) d'entrée suivant un algorithme (6) de cartographie mis en oeuvre par ordinateur ;
dans lequel le procédé comprend :
l'adaptation (S2) de l'algorithme (6) de cartographie mis en oeuvre par ordinateur de manière à ce que le deuxième dispositif (4) de commande produise, à la réception des données (SD) de système comme données (ID) d'entrée, des données (OD) de sortie qui sont semblables aux données (CD) de commande produites par le premier dispositif (2) de commande avec un degré de similitude déterminé à l'avance, l'algorithme (6) de cartographie mis en oeuvre par ordinateur comprenant un algorithme de réseau neuronal et/ou un algorithme d'apprentissage automatique ;
la surveillance (S1) des données (SD) de système reçues par le premier dispositif (2) de commande et des données (CD) de commande correspondantes produites par le premier dispositif (2) de commande, les stades de surveillance et d'adaptation étant effectués pendant une phase de fonctionnement du système (1) automatisé.

2. Procédé suivant la revendication 1, dans lequel les stades de surveillance et/ou d'adaptation sont effectués de manière répétée en utilisant une pluralité de combinaisons de données (SD) de système et de données (CD) de commande produites.

3. Procédé suivant l'une des revendications 1 ou 2, dans lequel le stade d'adaptation comprend la comparaison des données (CD) de commande produites par le premier dispositif (2) de commande et des données (OD) de sortie produites par le deuxième dispositif (4) de commande en fonction des mêmes données (SD) de système reçues pour la détermination (S3) du degré de similitude.

4. Procédé suivant l'une des revendications 1 à 3, comprenant en outre :
si le degré de similitude est plus grand qu'un seuil supérieur déterminé à l'avance, le remplacement (S5) du premier dispositif (2) de commande par le deuxième dispositif (4) de commande et, facultativement, la désactivation du premier dispositif (2) de commande ; et/ou
si le degré de similitude est plus petit qu'un seuil inférieur déterminé à l'avance, le lancement de l'obtention de données (ID) d'entrée supplémentaires et/ou le stockage du degré de similitude déterminé dans une base de données.

5. Procédé suivant l'une des revendications 1 à 4, dans lequel la détermination du degré de similitude comprend l'évaluation statistique d'une coïncidence de données (CD) de commande produites par le premier dispositif (2) de commande et de données (OD) de sortie produites par le deuxième dispositif (4) de commande, si les mêmes données (SD) de système sont reçues/entrées.

6. Procédé suivant l'une des revendications 1 à 5, comprenant en outre : le remplacement du premier dispositif (2) de commande par le deuxième dispositif (4) de commande, si les données (CD) de commande produites par le premier dispositif (2) de commande et les données (OD) de sortie produites par le deuxième dispositif (4) de commande coïncident pour un nombre déterminé à l'avance de cycles de commande, notamment consécutifs, du système (1) automatisé.

7. Procédé suivant l'une des revendications 1 à 6, dans lequel le dispositif (3) commandé comprend un dispositif sur site, une unité de production et/ou un robot.

8. Procédé suivant l'une des revendications 1 à 7, dans lequel les données (SD) de système sont des données de capteur acquises par des dispositifs de capteur du système (1) automatisé.

9. Procédé suivant l'une des revendications 1 à 8, dans lequel :
le système (1) automatisé comprend, en outre, un dispositif de base de données pour mettre à disposition des données de configuration pour le premier dispositif (2) de commande ; et
le premier dispositif (2) de commande est constitué, en outre, pour recevoir des données de configuration et pour produire les données (CD) de commande en fonction des données (SD) de système reçues et des données de configuration ;
l'adaptation du deuxième dispositif (4) de commande comprend l'entrée des données (SD) de système et des données de configuration comme données (ID) d'entrée dans le deuxième dispositif (4) de commande.

10. Procédé suivant l'une des revendications 1 à 9, dans lequel les données (SD) de système, les données de configuration et/ou les données (CD) de commande sont représentées respectivement par une pluralité de signaux analogiques et/ou numériques.

11. Système automatisé comprenant :
un dispositif (3) commandé constitué pour effectuer une action en fonction de données (CD) de commande reçues ; et
un premier dispositif (2) de commande constitué pour recevoir des données (SD) de système et pour produire des données (CD) de commande pour commander le dispositif (3) commandé en fonction des données (SD) de système reçues ; et
un dispositif (4) de commande de machine constitué pour :
recevoir des données (ID) d'entrée et produire des données (OD) de sortie en fonction des données (ID) d'entrée suivant un algorithme (6) de cartographie mis en oeuvre par ordinateur ; et
adapter l'algorithme (6) de cartographie mis en oeuvre par ordinateur de manière à ce que le dispositif (4) de commande de machine produise, à la réception des données (SD) de système comme données (ID) d'entrée, des données (OD) de sortie qui sont semblables aux données (CD) de commande produites par le premier dispositif (2) de commande avec un degré de similitude déterminé à l'avance, l'algorithme (6) de cartographie mis en oeuvre par ordinateur comprenant un algorithme de réseau neuronal et/ou un algorithme d'apprentissage automatique ;
surveiller (S1) les données (SD) de système reçues par le premier dispositif (2) de commande et les données (CD) de commande correspondantes produites par le premier dispositif (2) de commande, les stades de surveillance et d'adaptation étant effectués pendant une phase de fonctionnement d'un système (1) automatisé.

12. Produit de programme informatique comprenant des instructions pouvant être lues par ordinateur, faisant qu'un système informatique comprenant un ou plusieurs dispositifs de traitement, en réaction à l'exécution des instructions pouvant être lues par machine, effectue le procédé suivant l'une des revendications 1 à 10.
